# EUROPÄISCHE PATENTSCHRIFT

(11) **EP 3 847 116 B1**
(45) Veröffentlichungstag und Bekanntmachung des Hinweises auf die Patenterteilung: **15.06.2022**
(21) Anmeldenummer: 19762153.5
(22) Anmeldetag: 02.09.2019
(51) Int. Cl.: B65G 65/06

(54) **ABRÄUMVORRICHTUNG ZUM ABRÄUMEN UND ABFÖRDERN VON SCHÜTTGUT VON EINER SCHÜTTGUTHALDE MIT PFLUGFÖRMIGEN AKTIVIERUNGSELEMENTEN**
REMOVAL APPARATUS FOR REMOVING AND CONVEYING BULK MATERIAL FROM A BULK MATERIAL PILE, COMPRISING PLOUGH-SHAPED ACTIVATION ELEMENTS
DISPOSITIF D'ENLÈVEMENT PERMETTANT D'ENLEVER ET D'ÉVACUER UN PRODUIT EN VRAC À PARTIR D'UNE HALDE DE PRODUIT EN VRAC À L'AIDE DES ÉLÉMENTS D'ACTIVATION EN FORME DE RABOT

(30) Priorität: 05.09.2018 DE 102018121627
(43) Veröffentlichungstag der Anmeldung: 14.07.2021
(73) Patentinhaber: thyssenkrupp Industrial Solutions AG, 45143 Essen (DE); thyssenkrupp AG, 45143 Essen (DE)
(72) Erfinder: HAACK, Aimo Dirk, 59320 Ennigerloh (DE); STEIGÜBER, Ralf, 59329 Wadersloh (DE); SCHUMACHER, Mike, 59269 Beckum (DE)
(74) Vertreter: thyssenkrupp Intellectual Property GmbH
(86) Internationale Anmeldenummer: PCT/EP2019/073355
(87) Internationale Veröffentlichungsnummer: WO 2020/048923

(56) Entgegenhaltungen:
- CN-A- 107 128 644
- CN-A- 108 100 688
- CN-U- 206 494 534
- DE-A1- 3 735 796
- DE-A1- 4 114 903

## Beschreibung

Die Erfindung betrifft eine Abräumvorrichtung zum Abräumen und Abfördern von Schüttgut, beispielsweise von Rohmaterialien für die Zementherstellung, von einer Schüttguthalde. Eine solche Abräumvorrichtung, wie sie grundsätzlich aus der DE 41 14 903 A1 bekannt ist, umfasst eine Fördereinrichtung, die zum Abfördern von Material von der Schüttguthalde an einem Fuß der Schüttguthalde positioniert ist, und eine Kratzeinrichtung, die entlang einer Böschungsseite der Schüttguthalde, die der Fördereinrichtung zugewandt ist, hin und her bewegbar ist, wobei die Kratzeinrichtung eine Mehrzahl von Aktivierungselementen umfasst, die für einen eingreifenden Kontakt mit dem Schüttgut vorgesehen sind.

Bei der aus der DE 41 14 903 A1 bekannten Abräumvorrichtung sind statische Aktivierungselemente in Form von relativ einfach ausgebildeten Dornen vorgesehen, die im Einsatz der Kratzeinrichtung in das Schüttgut ragen beziehungsweise eingreifen und durch die Bewegung der Kratzeinrichtung durch das Material bewegt werden, wodurch dieses gelockert und dadurch aktiviert beziehungsweise dazu angeregt wird, entlang der Böschungsseite in Richtung der Fördereinrichtung zu fließen. Derartige passive Aktivierungselemente haben sich zur Verwendung bei Schüttguthalden, bei denen das Schüttgut eher körnig und trocken und damit gut fließfähig ist, bewährt. Unzureichend kann dagegen die Aktivierung von relativ schwer fließfähigem Schüttgut, beispielsweise aus tonhaltigem Material, mittels solcher statischer Aktivierungselemente sein.

Die GB 2 020 623 A offenbart diesbezüglich die Verwendung eines aktiven Aktivierungselements in Form einer drehend angetriebenen Schnecke, wodurch eine ausreichende Aktivierung und damit ein ausreichendes Abräumen des Schüttguts von der Schüttguthalde in Richtung der Fördereinrichtung auch bei schwer fließfähigem Schüttgut realisierbar sein soll. Nachteilig an einem solchen aktiven Aktivierungselement ist dessen relativ komplexer Aufbau und damit die relativ hohen Kosten, die mit dessen Herstellung verbunden sind. Dies gilt insbesondere, wenn die entsprechende Kratzeinrichtung eine Mehrzahl von entlang der Längserstreckung der Böschungsseite der Schüttguthalde verteilt angeordneten Aktivierungselementen umfasst, wie dies für die passiven Aktivierungselemente bei der Abräumvorrichtung gemäß der DE 41 14 903 A1 vorgesehen ist und wodurch die Böschungsseite der Schüttguthalde relativ schnell möglichst großflächig und gleichmäßig mittels der Kratzeinrichtung bearbeitet werden kann.

Die DE 37 35 796 A1 offenbart eine Abräumvorrichtung nach dem Oberbegriff des Anspruchs 1 und beschreibt einen Portalkratzer zur Entleerung einer Schüttguthalde mit einem die Schüttguthalde überspannenden, in Längsrichtung der Schüttguthalde verfahrbaren Portal. An einem ersten Fuß des Portals und damit an einem ersten Fuß der Schüttguthalde ist ein schwenkbarer Kratzerausleger gelagert, dessen Länge kleiner als die Haldenfußbreite ist. Um einen durch diesen verkürzten Kratzerausleger verbliebenen Rest der Schüttguthalde abtragen zu können, ist an dem anderen Fuß des Portals ein zusätzliches Gerät in Form eines Rechens angeordnet, der gegenüber dem Portal schwenkbar ist. Dieser Rechen umfasst Zähne, die als einfache Lockerungszinken oder pflugartig ausgebildet sein können.

Aus der CN 206 494 534 U ist ein kombiniertes Bodenausziehsystem, das einen außenseitigen Ausgabeförderer, Kratzer, umfasst bekannt, wobei der Kratzer mit einem Kratzermechanismus versehen ist, der ferner einen seitlichen Zuführer und einen inneren Ausgabeförderer unterhalb der Halde umfasst, wobei der Kratzermechanismus eine Kette umfasst und auf dem Kettenkratzbrett installiert ist, wobei eine Vorwärts- oder Rückwärtsbewegung der Kette unter der Wirkung einer Antriebsvorrichtung den Kratzer antreibt, der das Material zu der entsprechenden Auslassöffnung schiebt.

Aus der DE 41 14 903 A1 ist eine Vorrichtung zum Abräumen und Abfördern des Schüttungutes von einer Schüttguthalde mit einer verfahrbaren Brücke und wenigstens einer entlang der Brücke verfahrbaren Kratzeinrichtung bekannt.

Aus der CN 107 128 644 A ist eine Harke mit Zähnen auf einer Harkenhalterung bekannt.

Aus der CN 108 100 688 A ist eine Vorrichtung mit einer Kämmvorrichtung bekannt, deren Ende über einen Verbindungsmechanismus mit einem Maschinenrahmen verbunden ist. Die Kämmeinrichtung ist mit einem Kämmrahmen und einer Hauptklaue versehen. Die Hauptklaue ist auf dem Kammrahmen befestigt. Die Hauptklaue ist mit mehreren Hauptmaterialkammzähnen versehen. Die Kammzähne sind entlang des Kammes des Kammrahmens verteilt. Zwei Reihen der Hauptkammzähne sind miteinander angeordnet. Ein Boden der Kämmvorrichtung ist mit einem Laufrad versehen, das drehbar auf einer Spur des Kammrahmens gelagert ist. Die Kämmeinrichtung treibt den Antriebsmechanismus zum Maschinenrahmen um die Bahn herum an.

Die Matthias Thiesing: "Kräfte und Kinematik an landtechnischen Pflügen", 18. Mai 2016 (2016-05-18), XP055720083 (https://kobra.unikassel.de/bitstream/handle/123456789/2016052450329/DissertationMatthiasThiesing .pdf?sequence=3&isAllowed=y) behandelt die Kräfte und die Kinematik an landtechnischen Pflügen.

Der Erfindung lag die Aufgabe zugrunde, eine Abräumvorrichtung zum Abräumen und Abfördern von Schüttgut von einer Schüttguthalde anzugeben, die auch für das Abräumen von schwer fließfähigem Schüttgut geeignet ist und dabei eine möglichst einfache konstruktive Ausgestaltung aufweist.

Diese Aufgabe ist bei einer Abräumvorrichtung gemäß dem Patentanspruch 1 gelöst. Vorteilhafte Ausgestaltungsformen einer solchen erfindungsgemäßen Abräumvorrichtung sind Gegenstände der weiteren Patentansprüche und/oder ergeben sich aus der nachfolgenden Beschreibung der Erfindung.

Erfindungsgemäß ist eine Abräumvorrichtung zum Abräumen und Abfördern von Schüttgut von einer Schüttguthalde vorgesehen, die zumindest eine Fördereinrichtung und eine Kratzeinrichtung umfasst. Die Fördereinrichtung ist dabei zum Abfördern von Material von der Schüttguthalde an einem Fuß der Schüttguthalde positionierbar oder positioniert und die Kratzeinrichtung ist entlang derjenigen Böschungsseite der Schüttguthalde, die der Fördereinrichtung zugewandt ist, hin und her bewegbar beziehungsweise kann entsprechend hin und her bewegt werden. Die Bewegbarkeit der Kratzeinrichtung entlang der Böschungsseite der Schüttguthalde kann dabei insbesondere (auch ausschließlich) eine längsaxiale Bewegung umfassen, so dass die Kratzeinrichtung entlang der Böschungsseite hin und her verschiebbar sein kann, wie dies von der Abräumvorrichtung gemäß der DE 41 14 903 A1 bekannt ist. Alternativ oder ergänzend kann auch vorgesehen sein, dass die hin und her bewegliche Kratzeinrichtung eine pendelnde Schwenkbewegung ausführt, wobei der Drehpunkt dieser Schwenkbewegung vorzugsweise im Bereich einer Spitze der Schüttguthalde angeordnet ist.

Die Kratzeinrichtung der erfindungsgemäßen Abräumvorrichtung umfasst weiterhin eine Mehrzahl von Aktivierungselementen, die für einen eingreifenden Kontakt mit dem Schüttgut vorgesehen sind. Dabei ist zumindest eines oder sind mehrere oder alle der Aktivierungselemente (jeweils) pflugförmig ausgebildet. Ein solches pflugförmiges Aktivierungselement weist zumindest eine bezüglich einer der Bewegungsrichtungen der Kratzeinrichtung vorauseilende Schar und mindestens ein dieser Schar bezüglich der entsprechenden Bewegungsrichtung nacheilendes Streichblech auf. Dabei ist vorzugsweise vorgesehen, dass das Streichblech oder die Streichbleche des pflugförmigen Aktivierungselements oder der pflugförmigen Aktivierungselemente derart ausgebildet und ausgerichtet sind, dass ein Teil des Schüttguts, der bei einer Bewegung der Kratzeinrichtung in einer der Bewegungsrichtungen von der dann vorauseilenden Schar gelockert würde, in Richtung der Fördereinrichtung gedrückt und/oder von einer darunterliegenden Schicht des Schüttguts abgehoben würde.

Das oder die Streichbleche, das/die vorzugsweise plattenförmig, d.h. als Flächenbauteil mit im Vergleich zu den anderen Dimensionen (Länge und Breite) relativ geringer Dicke ausgebildet ist/sind, kann/können vorzugsweise eine zwei- oder dreidimensional gekrümmte Form beziehungsweise Seitenfläche, die einerseits der entsprechenden Bewegungsrichtung und andererseits der Fördereinrichtung zugewandt ist, aufweisen. Alternativ kann das Streichblech aber auch eine ebene, d.h. nicht gekrümmte, Form/Seitenfläche aufweisen, wobei das Drücken des von der zugeordneten Schar gelösten Teils des Schüttguts in Richtung der Fördereinrichtung und/oder das Abheben dieses Teils des Schüttguts durch eine entsprechende Schrägstellung des Streichblechs beziehungsweise von dessen Seitenfläche realisiert ist.

Bei dem oder den pflugförmigen Aktivierungselement(en) der erfindungsgemäßen Abräumvorrichtung handelt es sich um (ein) passive(s) Aktivierungselement(e), das/die folglich konstruktiv relativ einfach ausgebildet und damit kostengünstig herstellbar sowie zudem wartungsarm sind. Gleichzeitig ermöglichen diese eine ausreichende Aktivierung auch von schwer fließfähigem Schüttgut, da diese infolge ihrer Formgebung und Ausrichtung das mit diesen in Kontakt kommende Schüttgut nicht nur auflockern, wie dies von den bekannten passiven Aktivierungselementen bekannt ist, sondern auch in Richtung der Fördereinrichtung drücken und/oder von einer darunter liegenden Schicht des Schüttguts abheben und damit das schwerkraftbedingte Fließen des gelockerten Schüttguts in Richtung der Fördereinrichtung unterstützen.

Damit das oder die pflugförmigen Aktivierungselemente ihre Wirkung hinsichtlich eines Abräumens des Schüttguts von der Schüttguthalde in beiden Bewegungsrichtungen der hin und her bewegbaren Kratzeinrichtung möglichst vorteilhaft entfalten können, ist/sind diese(s) (jeweils) erfindungsgemäß in Form eines Doppelpflugs ausgebildet. Ein solcher Doppelpflug umfasst zumindest jeweils eine bezüglich der beiden Bewegungsrichtungen der Kratzeinrichtung vorauseilende Schar und jeweils mindestens ein den Scharen zugeordnetes Streichblech, wobei vorzugsweise durch die Streichbleche ein Teil des Schüttguts, das von den Scharen gelöst wurde, jeweils in Richtung der Fördereinrichtung gedrückt und/oder von einer darunterliegenden Schicht des Schüttguts abgehoben wird. Zumindest die beiden Streichbleche können dabei vorzugsweise in einem Bauteil integriert beziehungsweise einstückig (d.h. zwei Scharbauteile, die miteinander verbunden sind) oder einteilig (d.h. aus einem Bauteil und insbesondere materialeinheitlich) ausgebildet sein, wodurch wiederum ein möglichst einfacher Aufbau und damit eine kostengünstige Herstellbarkeit realisiert werden kann.

Der gleiche Vorteil kann erreicht werden, wenn, wie dies vorzugsweise vorgesehen ist, die Schar oder die Scharen von einer Kante des oder eines (jeweils) zugehörigen Streichblechs ausgebildet sind.

Sofern bei der Abräumvorrichtung nicht vorgesehen ist, dass alle der Aktivierungselemente pflugförmig ausgebildet sind, kann vorzugsweise vorgesehen sein, dass das oder die pflugförmigen Aktivierungselemente in einem relativ nah an einer Basis der Kratzeinrichtung und damit im Bereich des Fußes der Schüttguthalde vorgesehen Abschnitt der Kratzeinrichtung und andersartige Aktivierungselemente in einem zur Anordnung relativ fern von der Basis der Kratzeinrichtung und damit von dem Fuß der Schüttguthalde vorgesehenen Abschnitt der Kratzeinrichtung positioniert sind. Das oder die pflugförmige(n) Aktivierungselement(e) bewirkt/bewirken dann eine ausreichende Aktivierung des in der Nähe des Fußes der Schüttguthalde angeordneten Schüttguts, das infolge der Belastung durch das oberhalb von diesem angeordneten Schüttgut relativ stark verdichtet und dadurch besonders schwer fließfähig sein kann. Die andersartigen Aktivierungselemente, die vorzugsweise ebenfalls passiv und beispielsweise in Form einfacher Dornen, beziehungsweise Stäbe oder Bügel ausgebildet sein können, können dagegen für eine ausreichende Aktivierung des weiter oben gelegenen Schüttguts ausreichend sein. Dadurch kann insgesamt ein besonders einfacher Aufbau einer erfindungsgemäßen Abräumvorrichtung realisiert werden, da die andersartigen Aktivierungselemente in konstruktiver Hinsicht noch einfacher ausgebildet sein können, als das oder die pflugförmigen Aktivierungselemente.

Gemäß einer bevorzugten Ausgestaltungsform der erfindungsgemäßen Abräumvorrichtung können eine Mehrzahl von pflugförmigen Aktivierungselementen vorgesehen sein, die bezüglich der Bewegungsrichtungen der Kratzeinrichtung beabstandet voneinander angeordnet sind, wobei für zumindest einige dieser Aktivierungselemente gilt, dass jeweils zwei pflugförmige Aktivierungselemente, die bezüglich dieser Bewegungsrichtungen der Kratzeinrichtung (mit Abstand) benachbart zueinander angeordnet sind, auch in einer Richtung, die senkrecht bezüglich der Bewegungsrichtungen der Kratzeinrichtung ausgerichtet ist, voneinander beabstandet angeordnet sind. Dadurch kann eine kaskadenartige Anordnung der pflugförmigen Aktivierungselemente erreicht werden, durch die ein besonders vorteilhaftes Abräumen von schwer oder auch annähernd nicht fließfähigem Schüttgut erreicht werden kann, indem die einzelnen Aktivierungselemente, durch die das Schüttgut in vorteilhafter Weise ein Stück weit in Richtung der Fördereinrichtung gedrückt wird, dieses Schüttgut an ein in Bewegungsrichtung der Kratzeinrichtung nachfolgendes Aktivierungselement übergeben, so dass ein stufenweises Fördern des Schüttguts in Richtung der Fördereinrichtung mittels mehrerer bezüglich den Bewegungsrichtungen der Kratzeinrichtung hintereinander angeordneter, pflugförmiger Aktivierungselemente erfolgt.

Die Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: eine erfindungsgemäße Abräumvorrichtung in einer Ansicht von vorne;
- Fig. 2:: die Abräumvorrichtung gemäß der Fig. 1 in einer Ansicht gemäß der Schnittebene II - II in der Fig. 1;
- Fig. 3:: eine Kratzeinrichtung, beispielsweise für eine Abräumvorrichtung gemäß den Fig. 1 und 2, in einer Ansicht von vorne;
- Fig. 4:: den in der Fig. 3 mit IV gekennzeichneten Abschnitt in vergrößerter Darstellung;
- Fig. 5:: das pflugförmige Aktivierungselement der Kratzeinrichtung gemäß den Fig. 3 und 4 in einer Ansicht von unten und
- Fig. 6:: das pflugförmige Aktivierungselement gemäß der Fig. 5 in einer Ansicht von hinten.

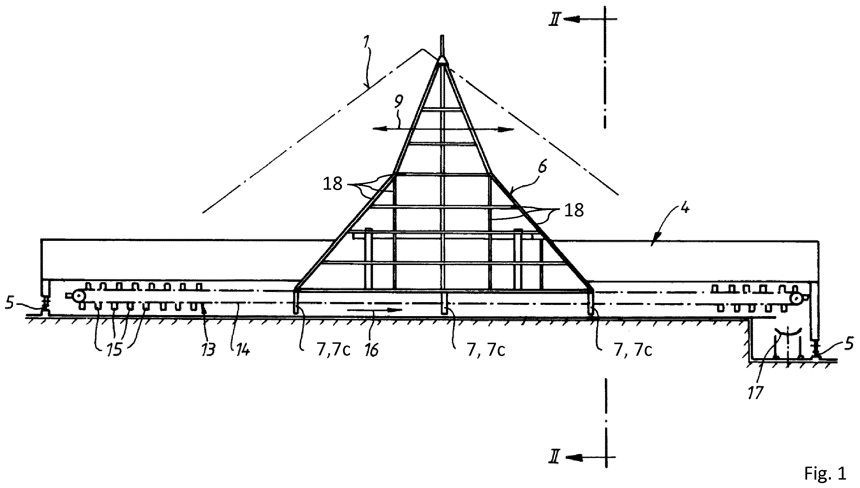

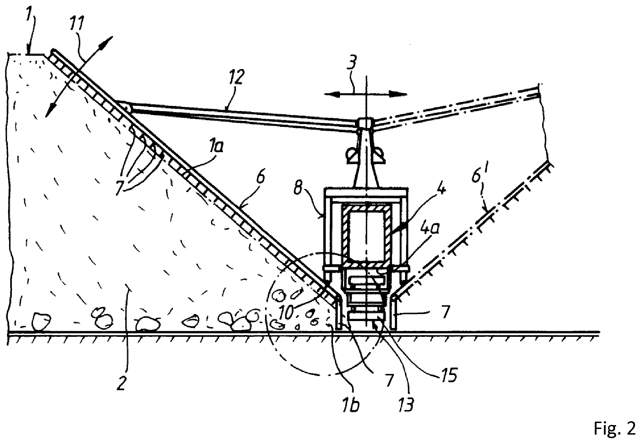

Der allgemeine Aufbau einer erfindungsgemäßen Abräumvorrichtung wird zunächst anhand der Fig. 1 und 2 erläutert. Darin ist eine durch strichpunktierte Linien umgrenzte Schüttguthalde 1 gezeigt. Das darin eingelagerte Schüttgut 2 soll mit Hilfe der Abräumvorrichtung von einer stirnseitigen Böschungsseite 1a aus abgeräumt werden. Diese Abräumvorrichtung umfasst eine bezüglich der Annäherung an die Schüttguthalde 1 auf Schienen 5 verfahrbare Brücke 4 (vgl. Doppelpfeil 3 in der Fig. 2), die sich im vorliegenden Fall über die gesamte Breite der Schüttguthalde 1 erstreckt (vgl. Fig. 1). Von dieser Brücke 4 wird eine auslegerartige Kratzeinrichtung 6 getragen, die in jeder geeigneten Weise ausgebildet sein kann, beispielsweise, wie dargestellt, mit einer Fachwerkstruktur. Die Kratzeinrichtung 6 umfasst eine Mehrzahl von Aktivierungselementen 7, die auf der der zugeordneten Schüttguthalde 1 zugewandten Unterseite der Kratzeinrichtung 6 angeordnet sind. Diese Aktivierungselemente 7 sind für einen eingreifenden Kontakt mit dem Schüttgut 2 vorgesehen, wodurch diese in Kombination mit einer hin und her gehenden Bewegung der Kratzeinrichtung 6 das Schüttgut oberflächlich an der entsprechenden Böschungsseite 1a der Schüttguthalde 1 lösen. Dadurch kann dieses entlang dieser Böschungsseite 1a zum Fuß 1b der Schüttguthalde hin abfließen.

Die Kratzeinrichtung 6 ist über ein Fahrgestell 8 derart von der Brücke 4 getragen, dass diese einerseits entlang der Brücke 4 in den Richtungen des Doppelpfeiles 9 (vgl. Fig. 1) quer zu der Böschungsseite 1a verfahren und andererseits um eine horizontale Schwenkachse 10 in den Richtungen des Doppelpfeiles 11 (vgl. Fig. 2) in Richtung auf die Schüttguthalde 1 hin oder von dieser weg geschwenkt werden kann. Dadurch kann die Kratzeinrichtung 6 in ihrer Neigung relativ zu der zu bearbeitenden Böschungsseite 1a der Schüttguthalde 1 eingestellt werden. Diese Neigungsverstellung kann beispielsweise mittels einer Seilwindeneinrichtung 12 realisierbar sein.

Die Brücke 4 trägt weiterhin im Bereich des Fußes 1b der Schüttguthalde 1 beziehungsweise an ihrer Unterseite 4a eine Fördereinrichtung 13, die bevorzugt in Form eines Förderbands oder eines Kratzerförderers ausgeführt ist. Letzterer kann in bekannter Weise eine über Rollen und Führungsschienen geführte, in Längsrichtung der Brücke 4 umlaufende Kette 14 sowie an dieser Kette 14 angebrachte Kratzerschaufeln 15 umfassen, die das durch die Kratzeinrichtung 6 von der Schüttguthalde 1 abgeräumte und der Fördereinrichtung 13 zugeführte Schüttgut 2 längs der Böschungsseite 1a in Richtung des Pfeiles 16 zu einem Bandförderer 17 fördert (vgl. Fig. 1).

Wie dies in der Fig. 2 angedeutet ist, kann die Abräumvorrichtung nicht nur auf einer Seite der Brücke 4 mit einer Kratzeinrichtung 6 ausgestattet sein, sondern es kann auch auf der anderen Seite der Brücke 4 eine gleich- oder andersartige Kratzeinrichtung 6' vom Fahrgestell 8 getragen werden, wie dies in der Fig. 2 durch strichpunktierte Linien angedeutet ist.

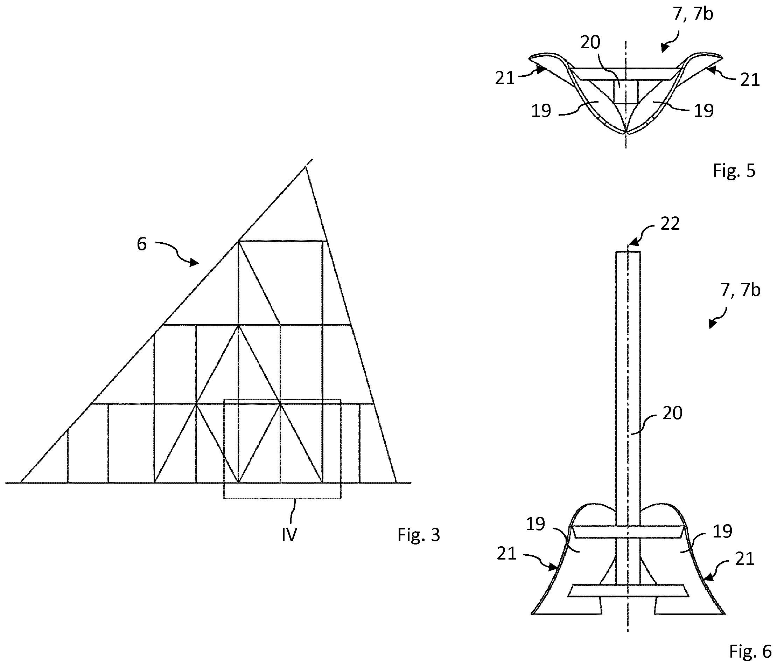

Mögliche Ausgestaltungen der Aktivierungselemente 7 der Abräumvorrichtung gemäß den Fig. 1 und 2 werden nunmehr anhand der Fig. 3 bis 6 näher erläutert, wobei die Fig. 3 in stark vereinfachter Darstellung eine Kratzeinrichtung 6 zeigt, die beispielsweise anstelle der dortigen Kratzeinrichtung(en) 6, 6' bei einer Abräumvorrichtung gemäß den Fig. 1 und 2 zum Einsatz kommen kann. Dabei unterscheiden sich die Kratzeinrichtungen 6 gemäß den Fig. 1 und 2 einerseits und gemäß der Fig. 3 andererseits beispielsweise ausschließlich hinsichtlich ihrer Grundformen, die bei der oder den Kratzeinrichtung(en) gemäß den Fig. 1 und 2, bei einer Ansicht von vorne, spiegelsymmetrisch bezüglich einer sich von der Spitze in Richtung einer Basis der Kratzeinrichtung(en) 6 erstreckenden Vertikalen ausgebildet ist, während die dreieckige Grundform der Kratzeinrichtung 6 gemäß der Fig. 3 diesbezüglich asymmetrisch ausgebildet ist. Die Grundformen der Kratzeinrichtung(en) 6, 6' gemäß den Fig. 1 und 2 kann dabei für die Verwendung bei einer Längshalde, d.h. bei einer Schüttguthalde 1, die mit deutlich größerer Länge als Breite ausgebildet ist, vorteilhaft sein, während die Grundform der Kratzeinrichtung 6 gemäß der Fig. 3 bei einer Rundhalde, d.h. bei einer Schüttguthalde 1, deren Fuß 1b eine in etwa kreisförmige Fläche bedeckt, Vorteile aufweisen kann.

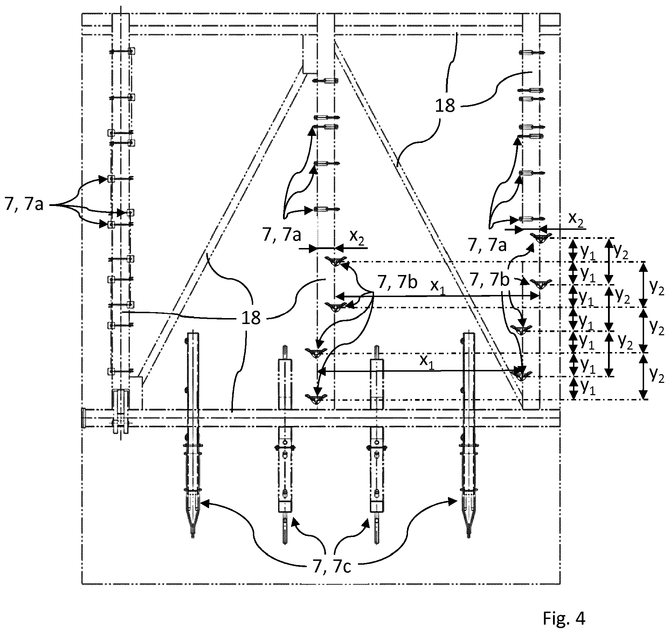

Auch die Kratzeinrichtung 6 gemäß der Fig. 3 weist eine Fachwerkstruktur auf, die eine Vielzahl von horizontal, d.h. parallel zu den Bewegungsrichtungen (vgl. Doppelpfeil 9 in der Fig. 1) der Kratzeinrichtung 6, und vertikal, d.h. senkrecht zu den Bewegungsrichtungen der Kratzeinrichtung 6, ausgerichtete Fachwerkbalken 18 (vgl. Fig. 1 und Fig. 4) sowie diese horizontalen und vertikalen Fachwerkbalken 18 an den Knotenpunkten verbindende Fachwerkbalken 18 umfasst.

Wie es sich aus der Fig. 4 ergibt, sind u.a. die vertikal ausgerichteten Fachwerkbalken 18 mit einer Mehrzahl von entlang der Längserstreckungen der Fachwerkbalken 18 beabstandet angeordneten Aktivierungselementen 7 versehen, die beispielsweise über einfache Verschraubungen mit diesen Fachwerkbalken 18 verbunden sein können. Dabei sind ausschließlich passive Aktivierungselemente 7 vorgesehen, wobei einerseits einfache dorn-, stab- oder bügelförmige Aktivierungselemente 7a vorgesehen sind, die sich beispielsweise in senkrechter Ausrichtung bezüglich einer von der Fachwerkstruktur aufgespannten Fläche in Richtung der Schüttguthalde 1 erstrecken. Andererseits sind erfindungsgemäß auch doppelpflugförmige Aktivierungselemente 7b (vgl. auch Fig. 5 und Fig. 6) vorgesehen, die ebenfalls passiv ausgebildet sind und die infolge ihrer Formgebung in vorteilhafter Weise eine ausreichende Aktivierung von relativ schlecht fließfähigem Schüttgut 2 der Schüttguthalde 1 ermöglichen.

Wie sich aus Fig. 5 und Fig. 6 ergibt, umfassen diese doppelpflugförmigen

Aktivierungselemente 7b jeweils zwei dreidimensional gekrümmte Streichbleche 19, die direkt sowie über Querstreben mit einem Ende eines stabförmigen Halteelements 20 verbunden sind. Dieses Halteelement 20 dient der Anbindung der dazugehörigen Streichbleche 19 an den zugeordneten Fachwerkbalken 18 der Fachwerkstruktur der Kratzeinrichtung 6. Diejenigen Kanten der Streichbleche 19, die jeweils bezüglich des anderen Streichblechs 19 distal und damit bezüglich jeweils einer der Bewegungsrichtungen (gemäß dem Doppelpfeil 9) vorauseilend gelegen sind, bilden jeweils eine Schar 21 aus, die ein Schneiden des von diesen kontaktierten Schüttguts 2 während einer Bewegung der Kratzeinrichtung 6 in einer der Bewegungsrichtungen gemäß dem Doppelpfeil 9 bei in das Schüttgut ragenden Aktivierungselementen 7 bewirken. Dabei ist die Formgebung dieser bogenförmig verlaufenden Scharen 21 derart, dass deren (Längs-)Abschnitte umso weiter in der jeweiligen Bewegungsrichtung vorauseilend gelegen sind, je tiefer diese in das Schüttgut 2 eingreifen. Mit anderen Worten sind die einzelnen Abschnitte der Scharen 21 umso weiter von der Längsachse 22 des dazugehörigen Halterelements 20 entfernt angeordnet, je weiter diese von dem zur Befestigung an der Fachwerkstruktur vorgesehenen, freien Ende dieses Halterelements 20 angeordnet sind. In ähnlicher Weise sind die Kanten, die die Streichbleche 19 jeweils an dem unteren, d.h. an dem am weitesten in das Schüttgut eingreifenden Ende der Streichbleche 19 begrenzen (und die gemeinsam eine Ebene definieren können, die senkrecht zu der Längsachse 22 des dazugehörigen Halteelements 20 ausgerichtet ist), derart verlaufend ausgebildet, dass die einzelnen (Längs-)Abschnitte dieser Kanten umso näher an der mit der Brücke 4 verbundenen Basis der Fachwerkstruktur beziehungsweise der Kratzeinrichtung 6 liegen, je näher diese zueinander positioniert sind. Gleichzeitig liegt zumindest ein Abschnitt dieser unteren Kanten der Streichbleche 19 näher an der Basis der Fachwerkstruktur als die entsprechenden Abschnitte der oberen Kanten der Streichbleche 19. Insgesamt ergibt sich dadurch eine Form und Ausrichtung für die Streichbleche 19, durch die ein Teil des Schüttguts 2, der infolge einer Bewegung der Kratzeinrichtung 6 in einer der Bewegungsrichtungen gemäß dem Doppelpfeil 9 von der dann vorauseilenden Schar gelockert wurde, sowohl in Richtung der Basis der Kratzeinrichtung 6 und damit in Richtung der Fördereinrichtung 13 gedrückt als auch abgehoben, d.h. von der darunterliegenden Schicht des Schüttguts 2 ein Stück weit entfernt wird. Dadurch wird ermöglicht, dass auch dieser zuvor gegebenenfalls stark verdichtete und damit mit dem umgebenden Schüttgut 2 relativ stark verbundene Teil des Schüttguts 2 hinsichtlich einer Fließbewegung in Richtung der Fördereinrichtung 13 aktiviert wird.

Die pflugförmigen Aktivierungselemente 7b können, wie dies anhand der Fig. 4 beispielhaft dargestellt ist, vorzugsweise jeweils in einem unteren, an die Basis der Fachwerkstruktur angrenzenden Abschnitt der dafür vorgesehenen, vertikal ausgerichteten Fachwerkbalken 18 angeordnet sein, während die andersartigen Aktivierungselemente 7a in den anderen Abschnitten vorgesehen sind. Die pflugförmigen Aktivierungselemente 7b sind dadurch im Bereich des Fußes der zu bearbeitenden Schüttguthalde 1 angeordnet, in der das Schüttgut 2 infolge der Belastung durch das darüber liegende Schüttgut 2 relativ stark verdichtet und somit besonders schwer fließfähig sein kann. In den höher gelegenen Abschnitten der Schüttguthalde 1 kann dagegen eine Aktivierung des Schüttguts 2 mittels der dornbeziehungsweise stabförmigen Aktivierungselemente 7a ausreichend sein.

Der Fig. 4 kann zudem noch entnommen werden, dass die pflugförmigen Aktivierungselemente 7c kaskadenartig an den vertikal ausgerichteten Fachwerkbalken 18 angeordnet sind, so dass solche Aktivierungselemente, die bezüglich der Bewegungsrichtungen 9 der Kratzeinrichtung 6 (mit dem Abstand x₁ oder x₂) benachbart zueinander angeordnet sind, auch jeweils bezüglich einer Richtung, die senkrecht zu diesen Bewegungsrichtungen 9 ausgerichtet ist, beabstandet (mit dem Abstand y₁ oder y₂) angeordnet sind.

Wie es sich aus den Fig. 1, 2 und 4 ergibt, kann eine Kratzeinrichtung 6 einer Ausführungsform der erfindungsgemäßen Abräumvorrichtung auch zusätzliche Aktivierungselemente 7c umfassen, die an der Basis angeordnet beziehungsweise mit den dort verlaufenden, horizontal ausgerichteten Fachwerkbalken 18 der Fachwerkstruktur verbunden sind und die sich in einer in etwa vertikalen Ausrichtung in das dortige Schüttgut 2 im Fuß 1b der Schüttguthalde 1 erstrecken. Da das Schüttgut 2 dort besonders stark verdichtet sein und zudem besonders große Schüttgutbrocken umfassen kann (vgl. Fig. 2) sind diese zusätzlichen Aktivierungselemente 7c, die ebenfalls dorn- beziehungsweise stabförmig oder pflugförmig ausgebildet sein können, besonders groß und damit auch stabil dimensioniert.

### Bezugszeichenliste:

- 1: Schüttguthalde
- 1a: Böschungsseite der Schüttguthalde
- 1b: Fuß der Schüttguthalde
- 2: Schüttgut
- 3: Verfahrbarkeit der Brücke
- 4: Brücke
- 4a: Unterseite der Brücke
- 5: Schiene
- 6: Kratzeinrichtung
- 6': Kratzeinrichtung
- 7: Aktivierungselement
- 7a: dornförmiges Aktivierungselement
- 7b: pflugförmiges Aktivierungselement
- 7c: zusätzliches Aktivierungselement
- 8: Fahrgestell
- 9: Verfahrbarkeit des Fahrgestells und der Kratzeinrichtung
- 10: Schwenkachse der Kratzeinrichtung
- 11: Schwenkbarkeit der Kratzeinrichtung
- 12: Seilwindeneinrichtung
- 13: Fördereinrichtung
- 14: Kette der Fördereinrichtung
- 15: Kratzerschaufel der Fördereinrichtung
- 16: Förderrichtung der Fördereinrichtung
- 17: Bandförderer
- 18: Fachwerkbalken
- 19: Streichblech eines pflugförmigen Aktivierungselements
- 20: Halteelement eines pflugförmigen Aktivierungselements
- 21: Schar eines pflugförmigen Aktivierungselements
- 22: Längsachse eines Halterelements

## Patentansprüche

1. Abräumvorrichtung zum Abräumen und Abfördern von Schüttgut (2) von einer Schüttguthalde (1) umfassend eine Fördereinrichtung (13), die zum Abfördern von Schüttgut (2) von der Schüttguthalde (1) an einem Fuß (1b) der Schüttguthalde (1) positionierbar ist, und eine Kratzeinrichtung (6), die entlang einer Böschungsseite (1a) der Schüttguthalde (1), die der Fördereinrichtung (13) zugewandt ist, hin und her bewegbar ist, wobei die Kratzeinrichtung (6) eine Mehrzahl von Aktivierungselementen (7) umfasst, die für einen eingreifenden Kontakt mit dem Schüttgut (2) ausgebildet sind, wobei zumindest eines, mehrere oder alle der Aktivierungselemente (7) pflugförmig ausgebildet ist/sind, so dass diese(s) zumindest eine bezüglich einer der Bewegungsrichtungen (9) der Kratzeinrichtung (6) vorauseilende Schar (21) und mindestens ein der Schar (21) nacheilendes Streichblech (19) umfasst/umfassen, **dadurch gekennzeichnet, dass** das oder die pflugförmigen Aktivierungselemente (7b) doppelpflugförmig ausgebildet ist/sind, so dass diese(s) zumindest jeweils eine in den beiden Bewegungsrichtung (9) der Kratzeinrichtung (6) vorauseilende Schar (21) und jeweils ein den Scharen (21) nacheilendes Streichblech (19) umfasst/umfassen.

2. Abräumvorrichtung gemäß Anspruch 1, **dadurch gekennzeichnet, dass** das oder die Streichbleche (19) des oder der pflugförmigen Aktivierungselemente (7b) derart ausgebildet und ausgerichtet ist/sind, dass ein Teil des Schüttguts (2), der bei einer Bewegung der Kratzeinrichtung (6) in einer der Bewegungsrichtungen (9) von der dann vorauseilenden Schar (21) gelockert würde, in Richtung der Fördereinrichtung (13) gedrückt würde.

3. Abräumvorrichtung gemäß Anspruch 1 oder 2, **dadurch gekennzeichnet, dass** das oder die Streichblech(e) (19) des oder der pflugförmigen Aktivierungselemente (7b) derart ausgebildet und ausgerichtet ist/sind, dass ein/der Teil des Schüttguts (2), der bei einer Bewegung der Kratzeinrichtung (6) in einer der Bewegungsrichtungen (9) von der dann vorauseilenden Schar (21) gelockert würde, von einer darunterliegenden Schicht des Schüttguts (2) abgehoben würde.

4. Abräumvorrichtung gemäß einem der vorhergehenden Ansprüche, **dadurch gekennzeichnet, dass** die Schar (21) oder die Scharen (21) von einer Kante des zugehörigen Streichblechs (19) ausgebildet ist/sind.

5. Abräumvorrichtung gemäß einem der vorhergehenden Ansprüche, **dadurch gekennzeichnet, dass** das oder die pflugförmigen Aktivierungselemente (7b) in einem relativ nah an einer Basis der Kratzeinrichtung (6) angeordneten Abschnitt und andersartige Aktivierungselemente (7a) in einem relativ fern von der Basis der Kratzeinrichtung (6) angeordneten Abschnitt positioniert sind.

6. Abräumvorrichtung gemäß einem der vorhergehenden Ansprüche, **dadurch gekennzeichnet, dass** eine Mehrzahl von pflugförmigen Aktivierungselementen (7b) bezüglich der Bewegungsrichtungen (9) der Kratzeinrichtung (6) beabstandet voneinander angeordnet sind, wobei bezüglich dieser Bewegungsrichtungen (9) benachbarte, pflugförmige Aktivierungselemente (7b) auch in einer Richtung, die senkrecht bezüglich der Bewegungsrichtungen (9) der Kratzeinrichtung (6) ausgerichtet ist, voneinander beabstandet angeordnet sind.

## Claims

1. Removal apparatus for removing and conveying away bulk material (2) from a bulk material pile (1), comprising a conveying device (13) which can be positioned at a base (1b) of the bulk material pile (1) in order to convey away bulk material (2) from the bulk material pile (1), and a scraping device (6) which is movable to and fro along a sloping face (1a) of the bulk material pile (1) that faces the conveying device (13), wherein the scraping device (6) comprises a plurality of activation elements (7) which are designed for engaging contact with the bulk material (2), wherein at least one or more or all of the activation elements (7) is/are plough-shaped and thus comprises/comprise at least one leading ploughshare (21) with respect to one of the directions of movement (9) of the scraping device (6), and at least one mouldboard (19) trailing the ploughshare (21), **characterized in that** the plough-shaped activation element or activation elements (7b) is/are in the shape of a double-furrow plough, and therefore it or they at least in each case comprises/comprise a leading ploughshare (21) in the two directions of movement (9) of the scraping device (6) and a respective mouldboard (19) trailing the ploughshares (21).

2. Removal apparatus according to Claim 1, **characterized in that** the mouldboard or the mouldboards (19) of the plough-shaped activation element or activation elements (7b) is/are designed and oriented in such a manner that a portion of the bulk material (2) that, during a movement of the scraping device (6) in one of the directions of movement (9), would be loosened by the then leading ploughshare (21), would be pushed in the direction of the conveying device (13).

3. Removal apparatus according to Claim 1 or 2, **characterized in that** the mouldboard or the mouldboards (19) of the plough-shaped activation element or activation elements (7b) is/are designed and oriented in such a manner that a portion/the portion of the bulk material (2) that, during a movement of the scraping device (6) in one of the directions of movement (9), would be loosened by the then leading ploughshare (21), would be lifted by an underlaying layer of the bulk material (2).

4. Removal apparatus according to one of the preceding claims, **characterized in that** the ploughshare (21) or the ploughshares (21) is/are formed by an edge of the associated mouldboard (19).

5. Removal apparatus according to one of the preceding claims, **characterized in that** the plough-shaped activation element or activation elements (7b) is or are positioned in a portion arranged relatively close to a base of the scraping device (6) and other activation elements (7a) are positioned in a portion arranged relatively far from the base of the scraping device (6).

6. Removal apparatus according to one of the preceding claims, **characterized in that** a plurality of plough-shaped activation elements (7b) are arranged spaced apart from one another with respect to the directions of movement (9) of the scraping device (6), wherein plough-shaped activation elements (7b) which are adjacent with respect to said directions of movement (9) are also arranged spaced apart from one another in a direction which is oriented perpendicularly with respect to the directions of movement (9) of the scraping device (6).

## Revendications

1. Dispositif de déblaiement pour le déblaiement et l'évacuation de produit en vrac (2) d'un terril de produit en vrac (1), comprenant un appareil de transport (13) qui peut être positionné à un pied (1b) du terril de produit en vrac (1) pour l'évacuation de produit en vrac (2) du terril de produit en vrac (1), et un appareil de raclage (6) qui peut être déplacé en va-et-vient le long d'un côté de talus (1a) du terril de produit en vrac (1) qui est tourné vers l'appareil de transport (13), l'appareil de raclage (6) comprenant une pluralité d'éléments d'activation (7), qui sont configurés pour un contact d'engagement avec le produit en vrac (2), au moins l'un des, plusieurs ou tous les éléments d'activation (7) étant configurés en forme de charrue, de telle sorte que celui-ci ou ceux-ci comprennent au moins un soc (21) en avance par rapport à l'une des directions de déplacement (9) de l'appareil de raclage (6) et au moins un versoir (19) en retard sur le soc (21), **caractérisé en ce que** le ou les éléments d'activation en forme de charrue (7b) sont configurés en forme de double charrue, de telle sorte que celui-ci ou ceux-ci comprennent au moins respectivement un soc (21) en avance dans les deux directions de déplacement (9) de l'appareil de raclage (6) et respectivement un versoir (19) en retard sur les socs (21).

2. Dispositif de déblaiement selon la revendication 1, **caractérisé en ce que** le ou les versoirs (19) du ou des éléments d'activation en forme de charrue (7b) sont configurés et orientés de telle sorte qu'une partie du produit en vrac (2), qui serait détachée par le soc (21) alors en avance lors d'un déplacement de l'appareil de raclage (6) dans l'une des directions de déplacement (9), serait poussée en direction de l'appareil de transport (13) .

3. Dispositif de déblaiement selon la revendication 1 ou 2, **caractérisé en ce que** le ou les versoirs (19) du ou des éléments d'activation en forme de charrue (7b) sont configurés et orientés de telle sorte qu'une ou la partie du produit en vrac (2), qui serait détachée par le soc (21) alors en avance lors d'un déplacement de l'appareil de raclage (6) dans l'une des directions de déplacement (9), serait soulevée d'une couche sous-jacente du produit en vrac (2).

4. Dispositif de déblaiement selon l'une quelconque des revendications précédentes, **caractérisé en ce que** le soc (21) ou les socs (21) sont formés par un bord du versoir (19) correspondant.

5. Dispositif de déblaiement selon l'une quelconque des revendications précédentes, **caractérisé en ce que** le ou les éléments d'activation en forme de charrue (7b) sont positionnés dans une section agencée relativement proche d'une base de l'appareil de raclage (6) et des éléments d'activation différents (7a) sont positionnés dans une section agencée relativement loin de la base de l'appareil de raclage (6).

6. Dispositif de déblaiement selon l'une quelconque des revendications précédentes, **caractérisé en ce qu'**une pluralité d'éléments d'activation en forme de charrue (7b) sont agencés espacés les uns des autres par rapport aux directions de déplacement (9) de l'appareil de raclage (6) ; par rapport à ces directions de déplacement (9), des éléments d'activation en forme de charrue (7b) voisins étant également agencés espacés les uns des autres dans une direction qui est orientée perpendiculairement par rapport aux directions de déplacement (9) de l'appareil de raclage (6).
